# EUROPEAN PATENT SPECIFICATION

(11) **EP 2 508 432 B1**
(45) Date of publication and mention of the grant of the patent: **15.07.2015**
(21) Application number: 10833400.4
(22) Date of filing: 30.11.2010
(51) Int. Cl.: B65B 9/10, B65D 5/74, B65D 47/36

(54) **PACKAGING CONTAINER MANUFACTURING METHOD, SPOUT STOPPER, AND PACKAGING CONTAINER**
VERFAHREN ZUR HERSTELLUNG EINES VERPACKUNGSBEHÄLTERS, VERSCHLUSSSTOPFEN UND VERPACKUNGSBEHÄLTER
PROCEDE DE FABRICATION D'UN RECIPIENT D'EMBALLAGE, OBTURATEUR DE BEC VERSEUR ET RECIPIENT D'EMBALLAGE

(30) Priority: 30.11.2009 JP 2009272989
(43) Date of publication of application: 10.10.2012
(73) Proprietor: Tetra Laval Holdings & Finance S.A., 1009 Pully (CH)
(72) Inventor: KANEKO, Masamichi, Tokyo 102-8544 (JP)
(74) Representative: Müller Schupfner & Partner Patent- und Rechtsanwaltspartnerschaft mbB
(86) International application number: PCT/JP2010/071320
(87) International publication number: WO 2011/065556

(56) References cited:
- EP-A2- 1 147 990
- EP-A2- 1 227 041
- WO-A1-2006/054061
- CH-A- 475 137
- DE-A1- 19 837 527
- DE-A1- 19 837 527
- JP-A- 10 249 957
- JP-A- 2004 083 025
- JP-A- 2004 083 025
- JP-A- 2005 289 389
- JP-A- 2009 126 552
- JP-A- 2009 126 552
- JP-U- 58 003 463
- US-A- 5 636 771
- US-A- 5 636 771

## Description

### FIELD OF THE INVENTION

The present invention relates to a manufacturing method of a packaging container filled up with beverages, a spout closure, and the packaging container.

### BACKGROUND ART

In some containers filled up with liquid food, such as juices and milk, the containers with the final shape are obtained by forming web-like packaging laminate material with crease lines set beforehand into the tube shape, longitudinal sealing to the longitudinal direction of the tube, filling up with the food product into the tube shaped packaging material, sealing with the transversal seal of the transverse direction for each predetermined interval, cutting in the middle of the transversal seal zone to obtain the pillowy preformed body, and folding up along the crease lines.

The packaging container may have one of the various spout closures. The spout closure consists of a spout provided in the breakably sealed pouring hole of the packaging container, a cap covering the spout and the unsealing means built in the spout, for example, a unsealing edge, a pull ring, etc., and a packaging container for the fluids has the spout closure.

(See the patent documents 1 and 2)

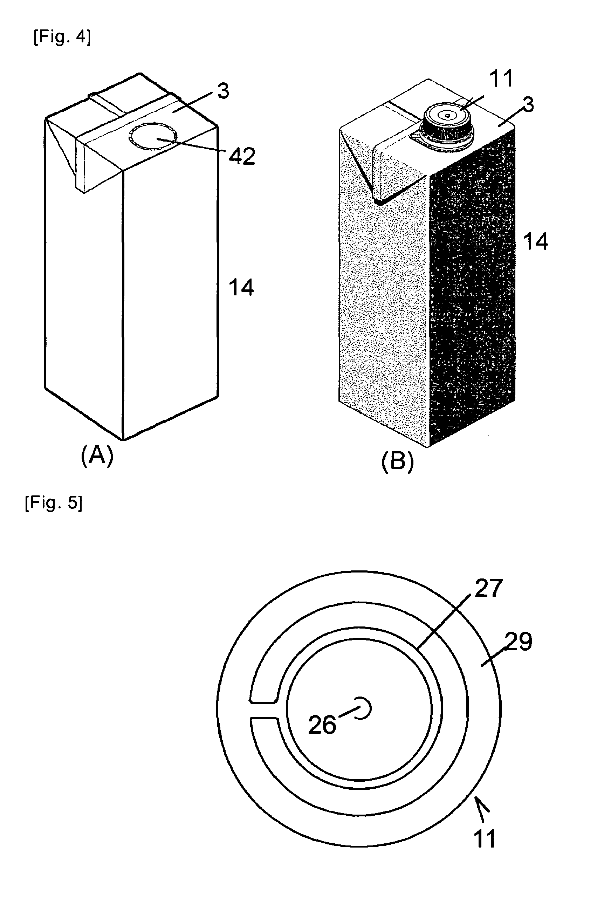

As shown in Fig. 4, the example of the packaging container equips a cap 11 (Fig. 4 (B)) which covers the spout (not shown) welded on the pouring hole 42 (Fig. 4 (A)) of the top panel 3 of the container 14.
Patent document 1: Japanese Utility Model Laid-Open No. 63-86021
Patent document 2: Japanese Patent Laid-Open No. 08-183555

JP 2009 126552 A discloses an inexpensively producible spout stopper provided with an oxygen barrier characteristic protecting a content in the container from the outside, a packaging container for a liquid body and a manufacturing method for the container.

JP 2004 083025 A discloses a spout device for a paper container or the like that is formed by providing an open/closed port frame with an open/close lid fitted on the outer periphery of an upper surface of the container opening. An unsealing plug in tight contact with the opening is integrally provided with a container lid.

### DISCLOSURE OF THE INVENTION

### PROBLEM TO BE SOLVED BY THE INVENTION

In the reclosable spout closure of the conventional packaging container, at the beginning of using, it is necessary to remove a cap, to open a sealed part, to remove the sealed part, and to open a pouring hole, and to reseal with the cap after pouring. Consumers may be complicated by repeating the removing of the unsealing actions after the removing the cap.

The present invention meets the above-mentioned necessity and longing. It is an object to provide a spout closure with simple unsealing actions at the unsealing, a packaging container, and a method of manufacturing the packaging container.

### MEANS TO SOLVE THE PROBLEM

The method of manufacturing a packaging container of the present invention, which solves the problem, which comprises
preparing a web-like laminated packaging material having the predetermined crease lines,
punching the web-like laminated packaging material for every predetermined interval to form a pouring hole,
arranging a first mold having the predetermined cavity to cover the inner side of the pouring hole corresponding to the inner side of the container,
arranging a second mold having the predetermined cavity to cover the outside of the pouring hole corresponding to the outside of the container,
injecting melt resin from a cavity gate into the cavities to form a spout tube and a spout of a spout closure, and a sealed partition,
forming the web-like laminated packaging material into tube shape,
forming an overlap of both edges of the packaging material,
longitudinal sealing to the longitudinal direction at the overlap to form a longitudinal seal zone,
filling up with contents in the tube shaped packaging material,
pressing the packaging material to the transverse direction for each predetermined interval,
sealing with the transversal sealing to form a transversal seal zone,
cutting the packaging material at the transversal seal zone to obtain a pillow-shaped preformed body,
folding up along crease lines to obtain a packaging container, and
arranging and sealing a cap to cover the spout,
is characterized by that
the spout closure has the spout having the spout tube provided in the pouring hole of the packaging container and a base integrated with the spout tube and joined to the container panel abound the pouring hole, and the breakable sealed partition provided with the bottom of the spout tube to seal the spout,
the cap covering the spout is detachably inserted in the spout tube, and the cap has a bottom partition adhering to and sealed with the top face of the sealed partition on the undersurface of the cap in order to break the sealed partition, and a pull ring pulling up the inserted cap.

In the preferable embodiment of this invention, the bottom partition of the cap has an air hole which penetrates through top and bottom of the partition, in the seal step of the cap, after inserting the cap in the spout tube, via the air hole, a space between the bottom partition and the sealed partition is evacuated, and the bottom partition is heat-sealed to the sealed partition.

In the preferable embodiment of this invention, a conductive layer is provided in a seal surface of the bottom partition and/or the sealed partition, in the seal step of the cap, after inserting the cap in the spout tube, the bottom partition adheres to the sealed partition and is heat-sealed to the sealed partition with induction heating.

In the preferable embodiment of this invention, a barrier film is arranged on an inwall of the cavity of the first mold, and a barrier layer is formed in at least the inner surface of the sealed partition.

The spout closure of this invention comprising the spout having the spout tube provided in the pouring hole of the packaging container and a base integrated with the spout tube and joined to the container panel abound the pouring hole, the breakable sealed partition provided with the bottom of the spout tube to seal the spout, the cap covering the spout, is characterized by that the cap is detachably inserted in the spout tube, the cap has a bottom partition adheres to the top face of the sealed partition and is sealed with the top face of the sealed partition on the undersurface of the cap in order to break the sealed partition, and a pull ring pulling up the inserted cap.

In the preferable embodiment of this invention, the cap consists of the bottom partition, a side wall which fits into an inner surface of the spout tube, a top panel which covers an upper end of the spout tube, and an outer wall which covers an outside surface of the spout tube, the outer wall is provided at least at the side and the other side where the pull ring pulls up the cap.

In the preferable embodiment of this invention, the outer wall covers the whole circumferences of the outside surface of the spout tube, at the side where the pull ring pulls up the cap, is breakably provided at the unsealing of the pulling.

The packaging container of this invention, obtained by forming the web-like laminated packaging material having crease lines into tube shape, forming an overlap of both edges of the packaging material, longitudinal sealing to the longitudinal direction at the overlap to form a longitudinal seal zone, filling up with contents in the tube shaped packaging material, pressing the packaging material to the transverse direction for each predetermined interval, sealing with the transversal sealing to form a transversal seal zone, cutting the packaging material at the transversal seal zone to obtain a pillow-shaped preformed body, and folding up along crease lines to obtain the packaging container,
is characterized by that
the packaging container has a spout closure comprising a spout having a spout tube provided in a pouring hole of the packaging container and a base integrated with the spout tube and joined to the container panel abound the pouring hole, a breakable sealed partition provided with the bottom of the spout tube to seal the spout, and a cap covering the spout,
the cap is detachably inserted in the spout tube, and the cap has a bottom partition adhering to and sealed with the top face of the sealed partition on the undersurface of the cap in order to break the sealed partition, and a pull ring pulling up the inserted cap.

### EFFECT OF THE INVENTION

According to the above present invention, the following advantageous function are performs and the remarkable effect is obtained.

In the method of manufacturing the packaging container of the present invention, the web-like laminated packaging material which has the predetermined crease lines is prepared, the web-like laminated packaging material is punched for every predetermined interval, and the pouring holes are formed continuously.

Because of the web-like, the pouring holes can be formed continuously efficiently, and simply.

The first mold that has the predetermined cavity is arranged so that the pouring hole inner side corresponding to the inner side of the container may be covered, the second mold that has the predetermined cavity is arranged so that the outside of the pouring hole corresponding to the outside of the container may be covered, and the melting resin is injected from the cavity gate to the cavities, and the spout tube, spout, and the sealed partition of the spout closure are formed.

The first mold and the second mold clip the pouring hole of the web-like laminated packaging material and the cavities equivalent to the spout tube, the spout, and the sealed partition are formed.

With injecting the melting resin into the cavities and insert molding the spout closure, the spout closure is formed and sealed at one step on the packaging material at high speed.

The web-like laminated packaging material is formed to tube shape, the overlap is formed in the edge section of the packaging material, the overlap is longitudinal sealed to the longitudinal direction, the longitudinal seal zone is formed, and the tube shape packaging material is formed.

Subsequently, the tube is filled up with the liquid food (content), such as the juice and the milk, the packaging material is pressed and transversal sealed to the transverse direction for each predetermined interval, the transversal seal zone is formed, the tube is cut at the transversal seal zone and the pillow-shaped preforming body is obtained and folded up along the crease lines, and the packaging container is obtained.

The cap is arranged and applied to the obtained packaging container so that the spout may be covered.

Since the cap is attached to the spout after forming the container, and filling the liquid food, the shape, the material, and the structure of the cap have the advantage with the high flexibility.

The spout closure comprises the spout having the spout tube provided in the pouring hole of the packaging container and a base integrated with the spout tube and joined to the container panel abound the pouring hole, and the breakable sealed partition provided with the bottom of the spout tube to seal the spout.

The spout tube can be open for free passage with the pouring hole, and the liquid food (content), such as the juice and the milk, can be smoothly poured out via the pouring hole.

By the injection molding, the base joins the container panel integrally on the outside circumference of the pouring hole, and the base can air-tightly fix the whole spout closure to the container safely.

The sealed partition can seal the spout at unused time in the bottom of the spout tube, and can be breakable by a weaken line, a brittle line, or the like at unsealing time.

The cap covering the spout is detachably inserted in the spout tube, and the cap comprises a bottom partition adhering to and sealed with the top face of the sealed partition on the undersurface of the cap in order to break the sealed partition, and a pull ring pulling up the inserted cap.

Since the cap covers the spout and the cap is detachably inserted in the spout tube, the spout is hygienically protected also at the distribution process or the shop front. Since the cap can be detached and attached freely, the reclosing capacity is assured. The inserting in the inside of the spout tube saves the space compactly in the container, and makes the volume of the whole spout closure small and slim.

The bottom partition of the cap adheres to the top face of the sealed partition at the undersurface of the bottom partition, and is sealed breakably to the contacted surfaces. When the bottom partition and pull ring cooperate and the inserted cap is pulled up with the pull ring at the time of unsealing, the sealed partition sealed with the bottom partition of the cap can also be pulled up.

In the preferable embodiment of this invention, the bottom partition of the cap has an air hole which penetrates through top and bottom of the partition, in the seal step of the cap, after inserting the cap in the spout tube, via the air hole, a space between the bottom partition and the sealed partition is evacuated, and the bottom partition is heat-sealed to the sealed partition.

In the seal step of the cap, by inserting the cap in the spout tube and putting the cap under decompression, the air between the bottom partition and the sealed partition is evacuated via the air hole, and the bottom partition adheres to the sealed partition. Both can be easily heat sealed by this adhering condition.

In the preferable embodiment of this invention, a conductive layer is provided in the seal surface of the bottom partition and/or the sealed partition, in the seal step of the cap, after inserting the cap in the spout tube, the bottom partition adheres to the sealed partition and is heat-sealed to the sealed partition with induction heating.

In the seal step of the cap, the heating needs to give heating energy from the cap end. By forming the conductive layer in the seal surface, and by using thermoplastic material of the cap, the cap can be precisely heat sealed with the induction heating. The conductive layer can be formed with the two steps molding by using the thermoplastic resin (polyethylene etc.) containing the magnetic substance, or with the insertion molding of a ring shaped conductive film of polyethylene (PE) / aluminum layer (Al) / PE on the seal surface.

n the preferable embodiment of this invention, a barrier film is arranged on an inwall of the cavity of the first mold, and a barrier layer is formed in at least the inner surface of the sealed partition.

Oxygen barrier property protecting the container content from the exterior can be given to the container.

The spout closure of this invention comprises the spout having the spout tube provided about the pouring hole of the packaging container and a base integrated with the spout tube and joined to the container panel abound the pouring hole, the breakable sealed partition provided with the bottom of the spout tube to seal the spout, and the cap covering the spout.

The spout tube can be open for free passage with the pouring hole, and the liquid food (content), such as the juice, the milk or the like, can be smoothly poured out via the pouring hole.

By the injection molding, the base joins the container panel integrally on the outside circumference of the pouring hole, and the base can air-tightly fix the whole spout closure to the container safely.

The sealed partition can seal the spout at unused time in the bottom of the spout tube, and can be breakable by a weaken line, a brittle line, or the like at unsealing time.

Since the cap covers the spout and the cap is detachably inserted in the spout tube, the spout is protected hygienically also at the distribution process or the shop front. Since the cap can be detached and attached freely, the reclosing capacity is assured. The inserting in the inside of the spout tube saves the space compactly in the container, and makes the volume of the whole spout closure small and slim.

The bottom partition of the cap adheres to the top face of the sealed partition at the undersurface of the bottom partition, and is sealed breakably to the contacted surfaces. When the bottom partition and pull ring cooperate and the inserted cap is pulled up with the pull ring at the time of unsealing, the sealed partition sealed with the bottom partition of the cap can also be pulled up.

In the preferable embodiment of this invention, the cap consists of the bottom partition, a side wall which fits into an inner surface of the spout tube, a top panel which covers an upper end of the spout tube, and an outer wall which covers an outside surface of the spout tube, the outer wall is provided at least at the side and the other side where the pull ring pulls up the cap.

The side wall fits in detachably with the inner surface of the spout tube, and secures the reclosing characteristic of the cap. The top panel and the outer wall cover the spout tube, and secure the hygienic characteristic.

The outer wall which covers an outside surface of the spout tub is provided at the side and the other side where the pull ring pulls up the cap, and when pulling up the cap with the pull ring, the other side outer wall becomes the fulcrum of the pulling-up rotary motion, and can secure the controlled movement.

In the preferable embodiment of this invention, the outer wall covers the whole circumferences of the outside surface of the spout tube, at the side where the pull ring pulls up the cap, is breakably provided at the unsealing of the pulling.

As mentioned above, the other side outer wall becomes the fulcrum of the pulling-up rotary motion, and can secure the controlled movement. On the other hand, in this embodiment, the outer wall of the side where the cap is pulled up with the pull ring is breakably provided at the time of pulling-unsealing, and it has smoothly pulling up of the cap with the pull ring, and a function as the tamper evidence.

The packaging container of the present invention is provided from web-shaped packaging material, and is filled up.

The spout closure comprises the spout having the spout tube provided in the pouring hole of the packaging container and a base integrated with the spout tube and joined to the container panel abound the pouring hole, the breakable sealed partition provided with the bottom of the spout tube to seal the spout, and the cap covering the spout.

The cap is detachably inserted in the spout tube, and the cap has a bottom partition adhering to and sealed with the top face of the sealed partition on the undersurface of the cap in order to break the sealed partition, and a pull ring pulling up the inserted cap.

The spout tube can smoothly pour out the liquid food through the pouring hole.

The base joins the container panel integrally, and the base can air-tightly fix the spout closure to the container safely.

The sealed partition can seal the spout at unused time, and can be breakable at unsealing time.

The cap protects hygienically the spout at the distribution process or the shop front. Since the cap can be detached and attached freely, the reclosing capacity is assured. The inserting in the inside of the spout tube saves the space compactly in the container, and makes the volume of the whole spout closure small and slim.

When the bottom partition and pull ring cooperate and the inserted cap is pulled up with the pull ring at the time of unsealing, the sealed partition sealed with the bottom partition of the cap can also be pulled up.

### BRIEF EXPLANATION OF THE DRAWINGS

[Fig. 1]

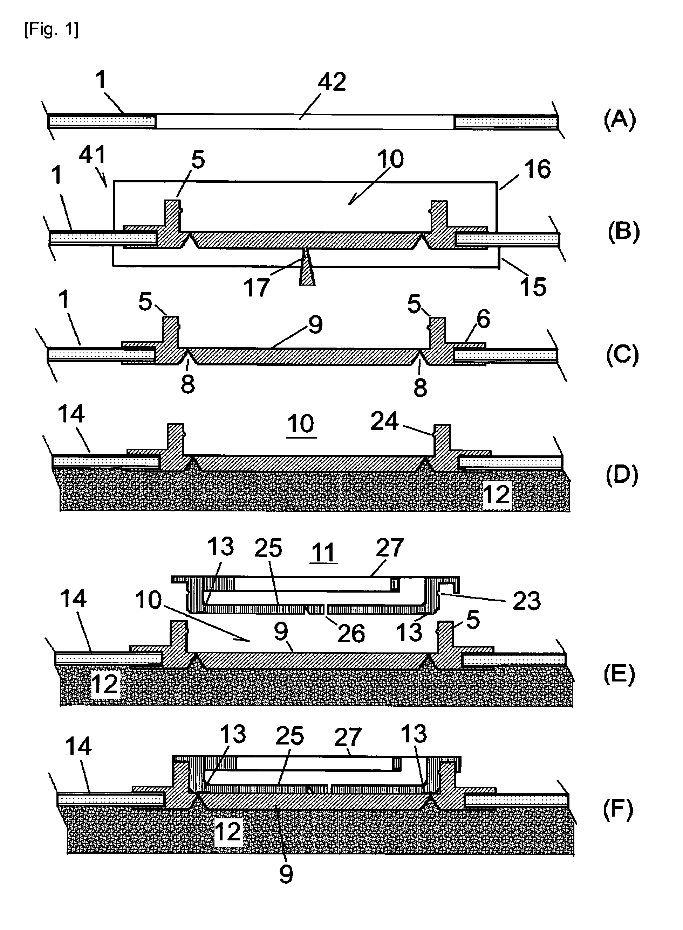

   Fig. 1 is a partial sectional view showing manufacturing steps of an Example of the spout closure according to this invention.
[Fig. 2]

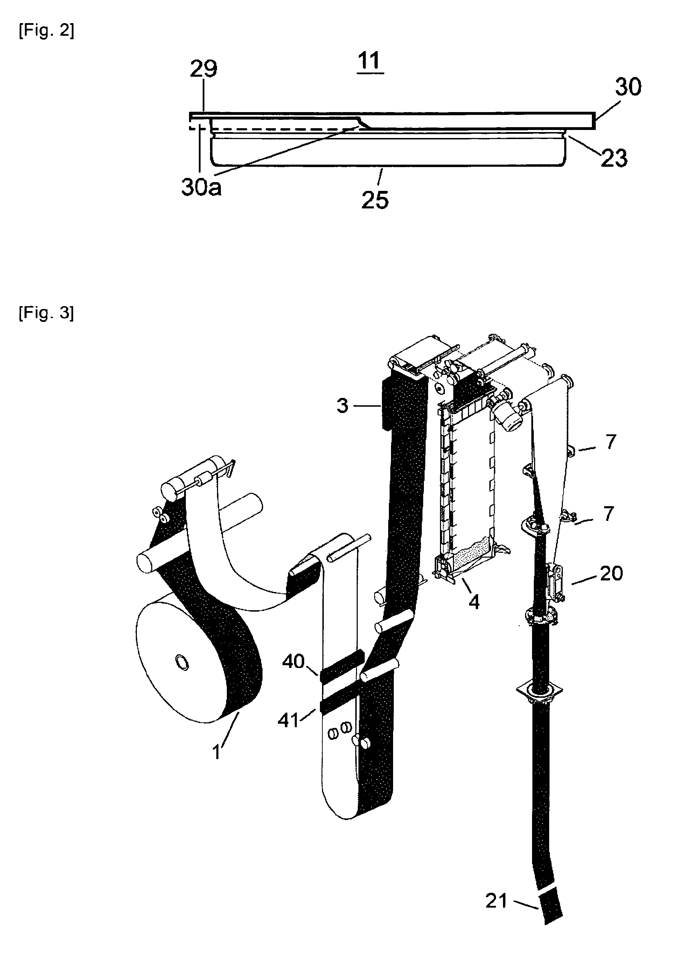

   Fig. 2 is a side view of the cap portion of the Example of the spout closure according to this invention.
[Fig. 3]
   Fig. 3 is an outline perspective view of an example of the packaging filling machine manufacturing a packaging container according to this invention
[Fig. 4]
   Fig. 4 is perspective views of an example of a packaging container without a spout closure (A), and a conventional example of a packaging container (B).
[Fig. 5]
   Fig. 5 is a top view of the cap portion of the Example of the spout closure according to this invention.
[Fig. 6]

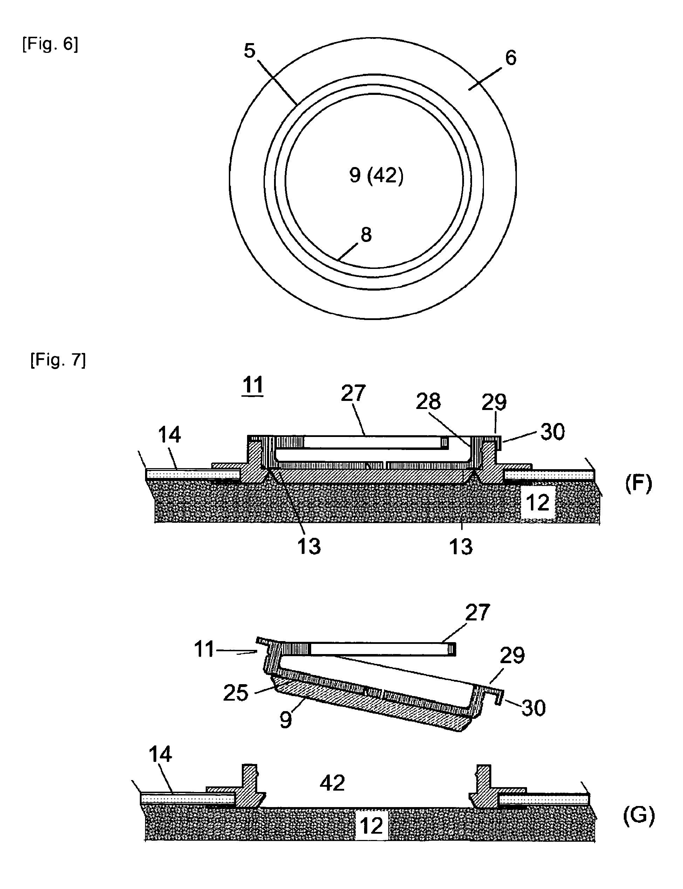

   Fig. 6 is a top view of the opened spout portion of the Example of the spout closure according to this invention.
[Fig. 7]
   Fig. 7 is the partial sectional view explaining unsealing action in the Example of the spout closure according to this invention.

### Explanation of references

1. Packaging Material
5. Spout Tube
6. Base
8. Brittle Line
9. Sealed Partition
10. Spout
11. Cap
12. Liquid Food
13. Conduct Layer (Seal Layer)
14. Container
15.. First Mold
16.. Second Mold
17.. Gate
23.. Groove
24.. Ridge
25.. Bottom Partition
26.. Air Hole
27.. Pull Ring
29.. Top Panel
30.. Outer Wall

### THE BEST MODE FOR THE INVENTION

Preferred embodiments of the present invention will hereinafter be described in detail with reference to the attached drawings.

By means of the packaging-filling machine shown in Fig. 3, the Example of the packaging container is manufactured. In the example of the machine, the web-like packaging laminating material 1 is loaded in the reel state into the packaging-filling machine. The packaging laminating material 1 comprises flexible laminate in which a paper substrate and polyethylene resin on both sides of the paper are laminated, a barrier layer, such as the aluminum foil, is formed between the paper substrate and a film, and printings for the exterior are applied before the forming to the corresponding surface of the packaging container 14.

The packaging laminated material 1 is continuously conveyed by a feeder as a conveying means, through bending rollers, damper rollers, etc., the web-like packaging laminated material 1 is punched with a punching device 40 for every predetermined interval, and pouring holes are formed.

Then, the spout portion of the spout closure on the pouring hole is formed by the injection-molding device 41 for forming the spout portion of the spout closure. The sectional view of the pouring hole 42 formed in the packaging laminated material 1 is shown in Fig. 1 (A).

With reference to Fig. 1 (B) which is the sectional view showing injection molding of the Example of the spout closure with an injection molding device 41, the step of injection molding of the spout of the spout closure of the Example according to this invention is explained.

The spout portion of the spout closure is formed, in this example of the injection-molding device 41 for forming the spout portion of the spout closure.

In this device, it has the predetermined cavity so that the inner side of the pouring hole corresponding to the container inner side may be covered, the first mold 15 that placed, preferably, the gas barrier film in inwall is arranged, and the second mold 16 that has the predetermined cavity is arranged so that the outside of the pouring hole corresponding to the container outside may be covered. Melt resin (polyolefin, such as the polyethylene and the polypropylene etc.) is injected from the cavity gate 17 to the cavity, the spout tube 5 and the spout 10 of the spout closure are formed, and the gas barrier film is preferably integrated.

The sectional view of the followings is shown in Fig. 1 (C): The spout 10 having the spout tube 5 provided in the pouring hole 42 of the packaging material 1, and the base 6 integrated with the spout tube 5 to join to the container wall at the periphery area of the pouring hole; and the sealed partition 9 provided with the bottom of the spout tube so that the spout 10 might be sealed and can be broken.

The brittle line 8 at the periphery of the sealed partition 9 is breakably formed.

As shown in Fig. 3, the packaging laminated material is fed to the sealing tape applicator 3, and the sealing tape is applied along one edge of the packaging laminated material 1 by the sealing tape applicator.

When joining the sealing tape to the edge of the web shaped packaging laminated material 1, the sealing tape is applied to the web shaped packaging laminated material, the pressure roller is arranged and pushed on the one side, and the pressure by the pressure roller is received in another side, and the counter roller is arranged in the another side so that it may be countered, it may press down and support the tape. When the packaging laminated material is conveyed, the rotating pressure roller and the counter roller push the overlap part of the packaging laminated material and the sealing tape, and the overlap of the longitudinal seal is sealed.

The packaging laminated material 1 is fed to the sterilization bath 4, and is sterilized with sterilization liquid, such as the hydrogen peroxide, in the sterilization bath 4. The packaging laminated material 1 is fed to the aseptic chamber (not shown), after feeding to the air knife and being dried with the air knife. And the packaging laminated material 1 is gradually changed by the forming rings 7, and is made into tube shape (cylindrical) shape. The packaging laminated material 1 is sealed to the longitudinal direction by the longitudinal seal device 20, and the packaging laminated material 1 is filled up with the fluid food supplied via filling pipes (not shown).

When the edge sections of the packaging laminated material formed into tube shape is pushed and longitudinal sealed with the sealing tape by the longitudinal seal device 20, the one edge of the web shaped packaging laminated material is overlapped on another edge, and the pressure roller is arranged in the one side, enabling free rotation, and pushes them, the counter roller receiving the pressure by the pressure roller in another side is arranged, enabling free rotation, so that it may counter against the pressure roller, press and support, and the overlap of the longitudinal seal is sealed.

The tube shape packaging laminated material is guided with the roller, and is fed to the transversal seal device (not shown), and is pushed and sealed in the transversal direction, and the packaging laminated material transversally sealed is cut with the knife etc., and the pillow-shaped preforming body 21 is formed.

The pillow-shaped preforming body 21 is formed into the final shape by the final folder (not shown), and the packaging container 14 with fluid food is obtained.

The appearance perspective view of the example of the packaging container having no spout closure in the pouring hole 42 is shown in Fig. 4 (A). The perspective view of the conventional example of the packaging container is shown in Fig. 4 (B).

In this embodiment, the spout closure (not shown) is formed in the top panel 3 of the packaging container 14, and the cross section of the spout 10 of the spout closure covered with the cap 11 is shown in Fig. 1 (D). The liquid food 12 is filled up with, in this embodiment, into the inside of the container 14.

In the downstream of the production line of the final folder, the cap applicator (not shown) is equipped, in the example shown in Fig. 1.

The appearance that the cap is arranged and applied to the obtained packaging filled container so that the spout may be covered are shown in Fig. 1 (E) and (F). In this embodiment, the cap 11 is inserted and applied by the cap applicator from the upwards (container outside) into the spout tube 5 of the spout 10 on the top panel of the packaging container 14.

In this embodiment, in the seal step of the cap of having the conductive layer 13 in the sealing surface of the bottom partition of the cap 11, after inserting the cap 11 in the spout tube 5 of the spout 10, the bottom partition is adhered to the sealed partitions, is heat sealed by induction heating, and the sealing surface 13 is formed.

In this embodiment, in the seal step of the cap of having the air hole 26 in which the bottom partition 25 of the cap 11 penetrates through the upper and lower sides of the partition, after inserting the cap 11 in the spout tube 5, via the air hole 26, the space of the bottom partition 25 and the sealed partition 9 is evacuated, and they are adhered and heat sealed.

In the seal step of the cap, by putting the cap 11 under reduced pressure, the air between the bottom partition and the sealed partition is evacuated via the air hole 26, and the bottom partition 25 adheres to the sealed partition 9. The partitions are heat sealed under the adhesion condition.

In the preferable embodiment, the barrier film can be arranged on the inwall of the cavity of the first mold 15, and the barrier layer can be formed in at least the inner surface of the sealed partition. The oxygen barrier property which protects the container content from the outside can be given to the container.

The film according to this embodiment may be the film laminated with possible materials having the gas barrier characteristic. The material which has the gas barrier characteristic is the barrier property packaging material which has the block out characteristic about the gas, such as the oxygen, aroma, etc., including metallic foil, such as the aluminum, the ethylene-vinyl alcohol copolymer (EVOH), polyamide, such as the nylon, (PA), the plastic film that vapor-deposited the silicon oxide (SiOx) etc., the polyethylene terephthalate (PET), etc.

The spout closure of the embodiment, as shown in Fig. 1 (F), comprises the spout 10 having the spout tube 5 provided in the pouring hole 42 of the packaging container 14 and a base 6 integrated with the spout tube 5 and joined to the container panel abound the pouring hole, the breakable sealed partition 9 provided with the bottom of the spout tube to seal the spout 10, and the cap 11 covering the spout 10.

The spout tube 5 can be open for free passage with the pouring hole 42, and the liquid food, such as the juice, the milk or the like, can be smoothly poured out via the pouring hole 42.

By the injection molding, the base 6 joins the container panel integrally on the outside circumference of the pouring hole 42, and the base air-tightly fixes the whole spout closure to the container 14 safely. The sealed partition 9 seals the spout 10 at unused time in the bottom of the spout tube, and is breakable by a brittle line 8 at unsealing time.

Since the cap 11 covers the spout 10 and the cap 11 is detachably inserted in the spout tube 5, the spout is protected hygienically also at the distribution process or the shop front.

Since the cap can be detached and attached freely, the cap can be reclosed.

The bottom partition 25 of the cap adheres to the top face of the sealed partition 9 at the undersurface of the bottom partition 25, and is sealed breakably to the contacted surfaces.

When the bottom partition 25 and the pull ring 27 cooperate and the inserted cap 11 is pulled up with the pull ring 27 at the time of unsealing, the sealed partition 9 sealed with the bottom partition 25 of the cap 11 is also pulled up.

In the embodiment, the cap consists of the bottom partition, a side wall 28 which fits into an inner surface of the spout tube, a top panel which covers an upper end of the spout tube, and an outer wall 30 which covers an outside surface of the spout tube, the outer wall 30 is provided at the side and the other side where the pull ring pulls up the cap 11.

The side wall 28 fits in detachably with the inner surface of the spout tube 5, and secures the reclosing characteristic of the cap. The top panel 29 and the outer wall 30 cover the spout tube, and secure the hygienic characteristic.

The outer wall 30 which covers an outside surface of the spout tub is provided at the side and the other side where the pull ring 27 pulls up the cap 11, and when pulling up the cap with the pull ring, the other side outer wall becomes the fulcrum of the pulling-up rotary motion, and secures the controlled movement.

In the preferable embodiment, the outer wall 30 covers the whole circumferences of the outside surface of the spout tube 5, at the side where the pull ring 27 pulls up the cap 11, is breakably provided at the pulling-unsealing.

In this case, the other side outer wall 30 becomes the fulcrum of the pulling-up rotary motion, and secures the controlled movement. On the other hand, the outer wall 30a of the side where the cap is pulled up with the pull ring is breakably provided at the time of the pulling-unsealing, and it has smoothly pulling up of the cap 11 with the pull ring 27, and a function as the tamper evidence.

The present invention is not limited to the above-mentioned embodiment, and it is possible to make it deform variously based on the object of the present invention, and it does not eliminate them from the scope of the present invention.

### [Industrial applicability]

This invention can apply the manufacturing of the packaging container for beverages with the spout closure packed and filled with the beverages, such as the juice and the milk.

## Claims

1. A method of manufacturing a packaging container (14), which comprises preparing a web-like laminated packaging material (1) having the predetermined crease lines,
punching the web-like laminated packaging material (1) for every predetermined interval to form pouring holes,
arranging a first mold (15) having the predetermined cavity to cover the inner side of the pouring hole corresponding to the inner side of the container (14),
arranging a second mold (16) having the predetermined cavity to cover the outside of the pouring hole corresponding to the outside of the container (14),
injecting melt resin from a cavity gate (17) into the cavities to form a spout tube (5) and a spout (10) of a spout closure and a sealed partition (9), forming the web-like laminated packaging material (1) into tube shape to form an overlap of both edges of the packaging material (1),
longitudinal sealing to the longitudinal direction at the overlap to form a longitudinal seal zone,
filling up with contents in the tube shaped packaging material (1),
pressing the packaging material (1) to the transverse direction for each predetermined interval,
sealing with the transversal sealing to form a transversal seal zone,
cutting the packaging material (1) at the transversal seal zone to obtain a pillow-shaped preformed body,
folding up along crease lines to obtain the packaging container (14), and arranging and sealing a cap (11) to cover the spout (10),
the spout closure having the spout (10) having the spout tube (5) provided in the pouring hole of the packaging container (14) and a base (6) integrated with the spout tube (5) and joined to the container panel abound the pouring hole,
**characterized in that**
the spout closure has the breakable sealed partition (9) provided with the bottom of the spout tube (5) to seal the spout (10),
the cap (11) covering the spout (10) is detachably inserted in the spout tube (5), and the cap (11) has a bottom partition (25) adhering to and sealed with the top face of the sealed partition (9) on the undersurface of the cap (11) in order to break the sealed partition (9), and a pull ring (27) pulling up the inserted cap.

2. A method of manufacturing the packaging container (14) according to claim 1, wherein the bottom partition (25) of the cap (11) has an air hole (26) which penetrates through top and bottom of the partition, in the seal step of the cap (11), after inserting the cap (11) in the spout tube (5), via the air hole (26), a space between the bottom partition (25) and the sealed partition (9) is evacuated, and the bottom partition (25) is heat-sealed to the sealed partition (9).

3. A method of manufacturing the packaging container (14) according to claim 1, wherein a conductive layer (13) is provided in a seal surface of the bottom partition (25) and/or the sealed partition (9), in the seal step of the cap (11), after inserting the cap (11) in the spout tube (5), the bottom partition (25) adheres to the sealed partition (9) and is heat-sealed to the sealed partition (9) with induction heating.

4. A method of manufacturing the packaging container according to claim 3, wherein the conductive layer (13) is formed with a two step molding by using thermoplastic resin containing magnetic substance.

5. A method of manufacturing the packaging container according to claim 3, wherein the conductive layer (13) is a ring shaped conductive film of polyethylene/aluminium layer/polyethylene.

6. A method of manufacturing the packaging container (14) according to claim 1, wherein a barrier film is arranged on an inwall of the cavity of the first mold (15), and a barrier layer is formed in at least the inner surface of the sealed partition (9).

7. A spout closure comprising a spout (10) having a spout tube (5) provided in a pouring hole of a packaging container (14) obtained by forming a web-like laminated packaging material (1) into a tubular shape and by sealing the packaging material (1) and a base (6) integrated with the spout tube (5) and joined to a container panel abound the pouring hole, a breakable sealed partition (9) provided with the bottom of the spout tube (5) to seal the spout (10), a cap (11) covering the spout (10),
**characterized in that**
the cap (11) is detachably inserted in the spout tube (5),
the cap (11) has a bottom partition (25) that adheres to the top face of the sealed partition (9) and is sealed with the top face of the sealed partition (9) on the undersurface of the cap (11) in order to break the sealed partition (9), and a pull ring (27) pulling up the inserted cap (11), and
wherein the spout tube (5) and the spout (10) of the spout closure and the sealed partition (9) are formed by injecting melt resin on the packaging material forming the packaging container (14) by arranging a first mold (15) having the predetermined cavity to cover the inner side of the container (14) and arranging a second mold having the predetermined cavity to cover the outside of the pouring hole corresponding to the outside of the container (14).

8. A spout closure according to claim 7, wherein the cap (11) consists of the bottom partition (25), a side wall which fits into an inner surface of the spout tube (5), a top panel (29) which covers an upper end of the spout tube (5), and an outer wall (30) which covers an outside surface of the spout tube (5), the outer wall (30) is provided at least at the side and the other side where the pull ring (27) pulls up the cap (11).

9. A spout closure according to claim 7, wherein the outer wall (30) covers the whole circumferences of the outside surface of the spout tube (5), at the side where the pull ring (27) pulls up the cap (11), is breakably provided at the unsealing of the pulling.

10. A spout closure according to claim 7, wherein a conductive layer (13) is provided in a seal surface of the bottom partition (25) and/or the sealed partition (9), wherein the bottom partition (25) adheres and is heat-sealed to the sealed partition (9).

11. A spout tube according to claim 10, wherein the conductive layer (13) is formed by thermoplastic resin containing magnetic substance, or wherein the conductive layer (13) is a ring shaped conductive film of polyethylene/aluminium layer/polyethylene.

12. The packaging container (14), obtained by forming the web-like laminated packaging material (1) having crease lines into tube shape, forming an overlap of both edges of the packaging material (1), longitudinal sealing to the longitudinal direction at the overlap to form a longitudinal seal zone, filling up with contents in the tube shaped packaging material (1), pressing the packaging material (1) to the transverse direction for each predetermined interval, sealing with the transversal sealing to form a transversal seal zone, cutting the packaging material (1) at the transversal seal zone to obtain a pillow-shaped preformed body, and folding up along crease lines to obtain the packaging container (14),
the packaging container (14) has a spout closure comprising a spout (10) having a spout tube (5) provided in a pouring hole of the packaging container (14) and a base (6) integrated with the spout tube (5) and joined to the container panel abound the pouring hole,
**characterized in that**
the spout closure comprises a breakable sealed partition (9) provided with the bottom of the spout tube (5) to seal the spout (10), and a cap (11) covering the spout (10),
the cap (11) is detachably inserted in the spout tube (5), and the cap (11) has a bottom partition (25) adhering to and sealed with the top face of the sealed partition (9) on the undersurface of the cap (11) in order to break the sealed partition (9), and a pull ring (27) pulling up the inserted cap, and wherein the spout tube (5) and the spout (10) of the spout closure and the sealed partition (9) are formed by injecting melt resin on said packaging material (1) by arranging a first mold (15) having the predetermined cavity to cover the inner side of the pouring hole corresponding to the inner side of the container (14), and arranging a second mold (16) having the predetermined cavity to cover the outside of the pouring hole corresponding to the outside of the container.

13. The packaging container according to claim 12, wherein a conductive layer (13) is provided in a seal surface of the bottom partition (25) and/or the sealed partition (9), and wherein the bottom partition (25) adheres to the sealed partition (9) and is heat-sealed to the sealed partition (9).

14. The packaging container according to claim 13, wherein the conductive layer (13) is formed by thermoplastic resin containing magnetic substance, or wherein the conductive layer (13) is a ring shaped conductive film of polyethylene/aluminium layer/polyethylene.

## Patentansprüche

1. Verfahren zur Herstellung eines Verpackungsbehälters (14), das enthält das Vorbereiten eines bahnartigen laminierten Verpackungsmaterials (1) mit den vorbestimmten Falzlinien,
das Durchlochen des bahnartigen laminierten Verpackungsmaterials (1) für jeden vorbestimmten Abstand, um Gießlöcher zu formen,
das Anordnen eines ersten Formwerkzeugs (15) mit dem vorbestimmten Hohlraum, um die Innenseite des Gießlochs entsprechend der Innenseite des Behälters (14) zu bedecken,
das Anordnen eines zweiten Formwerkzeugs (16) mit dem vorbestimmten Hohlraum, um die Außenseite des Gießlochs entsprechend der Außenseite des Behälters (14) zu bedecken,
das Einspritzen von geschmolzenem Harz von einer Hohlraumangussöffnung (17) in die Hohlräume, um ein Ausgussrohr (5) und einen Ausguss (10) eines Ausgussverschlusses und eine versiegelte Trennwand (9) zu formen,
Formen des bahnartigen laminierten Verpackungsmaterials (1) in Rohrform, um eine Überlappung beider Kanten des Verpackungsmaterials (1) zu formen, Längsversiegeln in Längsrichtung an der Überlappung, um einen Längsversiegelungsbereich zu formen,
Füllen von Inhalt in das rohrförmige Verpackungsmaterial (1),
Pressen des Verpackungsmaterials (1) in Querrichtung für jeden vorbestimmten Abstand,
Versiegeln mit der Querversiegelung, um einen Querversiegelungsbereich zu formen,
Schneiden des Verpackungsmaterials (1) im Querversiegelungsbereich, um einen kissenförmigen vorgeformten Körper zu erhalten,
Falten entlang von Falzlinien, um den Verpackungsbehälter (14) zu erhalten, und Anordnen und Versiegeln einer Kappe (11), um den Ausguss (10) zu bedecken, wobei der Ausgussverschluss den Ausguss (10) mit dem Ausgussrohr (5) im Gießloch des Verpackungsbehälters (14) angeordnet und eine Basis (6) in das Ausgussrohr (5) integriert und mit der Behälterleiste um das Gießloch herum verbunden aufweist,
**dadurch gekennzeichnet, dass**
der Ausgussverschluss die zerbrechliche versiegelte Trennwand (9) mit dem Boden des Ausgussrohrs (5) vorgesehen aufweist, um den Ausguss (10) zu versiegeln,
die den Ausguss (10) bedeckende Kappe (11) lösbar in das Ausgussrohr (5) eingeführt wird, und die Kappe (11) eine untere Trennwand (25), die an der Oberseite der versiegelten Trennwand (9) an der Unterseite der Kappe (11) haftet und mit ihr versiegelt ist, um die versiegelte Trennwand (9) zu zerbrechen, und einen Ziehring (27) aufweist, der die eingeführte Kappe hochzieht.

2. Verfahren zur Herstellung des Verpackungsbehälters (14) nach Anspruch 1, wobei die untere Trennwand (25) der Kappe (11) ein Luftloch (26) aufweist, das die Ober- und Unterseite der Trennwand durchdringt, wobei im Versiegelungsschritt der Kappe (11), nach dem Einführen der Kappe (11) in das Ausgussrohr (5), über das Luftloch (26) ein Raum zwischen der unteren Trennwand (25) und der versiegelten Trennwand (9) evakuiert und die untere Trennwand (25) an die versiegelte Trennwand (9) heißgesiegelt wird.

3. Verfahren zur Herstellung des Verpackungsbehälters (14) nach Anspruch 1, wobei eine leitende Schicht (13) in einer Versiegelungsfläche der unteren Trennwand (25) und/oder der versiegelten Trennwand (9) vorgesehen wird, wobei im Versiegelungsschritt der Kappe (11) nach dem Einführen der Kappe (11) in das Ausgussrohr (5) die untere Trennwand (25) an der versiegelten Trennwand (9) haftet und mit Induktionserwärmung an die versiegelte Trennwand (9) heißgesiegelt wird.

4. Verfahren zur Herstellung des Verpackungsbehälters nach Anspruch 3, wobei die leitende Schicht (13) unter Verwendung eines eine magnetische Substanz enthaltenden thermoplastischen Harzes in einem zweistufigen Formvorgang geformt wird.

5. Verfahren zur Herstellung des Verpackungsbehälters nach Anspruch 3, wobei die leitende Schicht (13) eine ringförmige leitende Folie aus Polyethylen/Aluminiumschicht/Polyethylen ist.

6. Verfahren zur Herstellung des Verpackungsbehälters (14) nach Anspruch 1, wobei eine Barrierefolie auf einer Innenwand des Hohlraums des ersten Formwerkzeugs (15) angeordnet wird, und eine Barriereschicht in mindestens der Innenfläche der versiegelten Trennwand (9) geformt wird.

7. Ausgussverschluss mit einem Ausguss (10), der ein Ausgussrohr (5) in einem Gießloch eines Verpackungsbehälters (14), das durch Formen eines bahnartigen laminierten Verpackungsmaterials (1) in eine Rohrform und durch Versiegeln des Verpackungsmaterials (1) und einer in das Ausgussrohr (5) integrierten und mit einer Behälterseite um das Gießloch herum verbundenen Basis (6) erhalten wird, eine mit dem Boden des Ausgussrohrs (5) vorgesehene zerbrechliche versiegelte Trennwand (9), um den Ausguss (10) zu versiegeln, eine den Ausguss (10) bedeckende Kappe (11) aufweist,
**dadurch gekennzeichnet, dass**
die Kappe (11) lösbar in das Ausgussrohr (5) eingeführt wird,
die Kappe (11) eine untere Trennwand (25), die an der Oberseite der versiegelten Trennwand (9) haftet und mit der Oberseite der versiegelten Trennwand (9) an der Unterseite der Kappe (11) versiegelt ist, um die versiegelte Trennwand (9) zu zerbrechen, und einen Ziehring (27) aufweist, der die eingeführte Kappe (11) hochzieht, und
wobei das Ausgussrohr (5) und der Ausguss (10) des Ausgussverschlusses und die versiegelte Trennwand (9) durch Einspritzen von geschmolzenem Harz auf das den Verpackungsbehälter (14) formende Verpackungsmaterial geformt werden, indem ein erstes Formwerkzeug (15) mit dem vorbestimmten Hohlraum, um die Innenseite des Behälters (14) zu bedecken, und ein zweites Formwerkzeug mit dem vorbestimmten Hohlraum, um die Außenseite des Gießlochs entsprechend der Außenseite des Behälters (14) zu bedecken, angeordnet werden.

8. Ausgussverschluss nach Anspruch 7, wobei die Kappe (11) aus der unteren Trennwand (25), einer Seitenwand, die in eine Innenfläche des Ausgussrohrs (5) passt, einer oberen Leiste (29), die ein oberes Ende des Ausgussrohrs (5) bedeckt, und einer Außenwand (30) besteht, die eine Außenfläche des Ausgussrohrs (5) bedeckt, wobei die Außenwand (30) mindestens an der Seite und der anderen Seite vorgesehen ist, wo der Ziehring (27) die Kappe (11) hochzieht.

9. Ausgussverschluss nach Anspruch 7, wobei die den ganzen Umfang der Außenfläche des Ausgussrohrs (5) bedeckende Außenwand (30) an der Seite, wo der Ziehring (27) die Kappe (11) hochzieht, beim Entsiegeln des Ziehrings zerbrechlich vorgesehen ist.

10. Ausgussverschluss nach Anspruch 7, wobei eine leitende Schicht (13) in einer Siegelfläche der unteren Trennwand (25) und/oder der versiegelten Trennwand (9) vorgesehen ist, wobei die untere Trennwand (25) an der versiegelten Trennwand (9) haftet und an sie heißgesiegelt wird.

11. Ausgussrohr nach Anspruch 10, wobei die leitende Schicht (13) von einem magnetische Substanzen enthaltenden thermoplastischen Harz geformt wird, oder wobei die leitende Schicht (13) eine ringförmige leitende Folie aus Polyethylen/Aluminiumschicht/Polyethylen ist.

12. Verpackungsbehälter (14), der durch Formen des bahnartigen laminierten Verpackungsmaterials (1), das Falzlinien in Rohrform aufweist, Formen einer Überlappung beider Kanten des Verpackungsmaterials (1), Längsversiegelung in Längsrichtung an der Überlappung, um einen Längssiegelbereich zu formen, Füllen von Inhalt in das rohrförmige Verpackungsmaterial (1), Pressen des Verpackungsmaterials (1) in Querrichtung für jeden vorbestimmten Abstand, Versiegeln mit der Querversiegelung, um einen Querversiegelungsbereich zu formen, Schneiden des Verpackungsmaterials (1) im Querversiegelungsbereich, um einen kissenförmigen vorgeformten Körper zu erhalten, und Zusammenfalten entlang der Falzlinien erhalten wird, um den Verpackungsbehälter (14) zu erhalten, wobei der Verpackungsbehälter (14) einen Ausgussverschluss mit einem Ausguss (10) aufweist, der ein in einem Gießloch des Verpackungsbehälters (14) vorgesehenes Ausgussrohr (5) und eine in das Ausgussrohr (5) integrierte und mit der Behälterleiste um das Gießloch herum verbundene Basis (6) aufweist,
**dadurch gekennzeichnet, dass**
der Ausgussverschluss eine zerbrechliche versiegelte Trennwand (9), die mit der Unterseite des Ausgussrohrs (5) vorgesehen wird, um den Ausguss (10) zu versiegeln, und eine den Ausguss (10) bedeckende Kappe (11) aufweist,
die Kappe (11) lösbar in das Ausgussrohr (5) eingeführt wird, und die Kappe (11) eine untere Trennwand (25) aufweist, die an der Oberseite der versiegelten Trennwand (9) auf der Unterfläche der Kappe (11) haftet und damit versiegelt ist, um die versiegelte Trennwand (9) zu zerbrechen, und ein Ziehring (27) die eingeführte Kappe herauszieht, und wobei das Ausgussrohr (5) und der Ausguss (10) des Ausgussverschlusses und die versiegelte Trennwand (9) durch Einspritzen von geschmolzenem Harz auf das Verpackungsmaterial (1) geformt werden, indem ein erstes Formwerkzeug (15), das den vorbestimmten Hohlraum aufweist, um die Innenseite des Gießlochs entsprechend der Innenseite des Behälters (14) zu bedecken, und ein zweites Formwerkzeug (16) angeordnet werden, das den vorbestimmten Hohlraum aufweist, um die Außenseite des Gießlochs entsprechend der Außenseite des Behälters zu bedecken.

13. Verpackungsbehälter nach Anspruch 12, wobei eine leitende Schicht (13) in einer Versiegelungsfläche der unteren Trennwand (25) und/oder der versiegelten Trennwand (9) vorgesehen ist, und wobei die untere Trennwand (25) an der versiegelten Trennwand (9) haftet und an die versiegelte Trennwand (9) heißgesiegelt wird.

14. Verpackungsbehälter nach Anspruch 13, wobei die leitende Schicht (13) von einem eine magnetische Substanz enthaltenden thermoplastischen Harz geformt wird, oder wobei die leitende Schicht (13) eine ringförmige leitende Folie aus Polyethylen/Aluminiumschicht/Polyethylen ist.

## Revendications

1. Procédé de fabrication d'un conteneur d'emballage (14), qui comprend les étapes consistant à
préparer un matériau d'emballage laminé semblable à une nappe (1) ayant des lignes de pliage prédéterminées,
poinçonner le matériau d'emballage laminé semblable à une nappe (1) à chaque intervalle prédéterminé pour former des trous de versement,
agencer un premier moule (15) ayant une cavité prédéterminée pour couvrir le côté intérieur du trou de versement correspondant au côté intérieur du conteneur (14),
agencer un second moule (16) ayant une cavité prédéterminée pour couvrir l'extérieur du trou de versement correspondant à l'extérieur du conteneur (14),
injecter une résine en fusion depuis une porte de cavité (17) vers l'intérieur des cavités pour former un tube-bec (5) et un bec verseur (10) d'une fermeture de bec, et une cloison scellée (9),
former le matériau d'emballage laminé semblable à une nappe (1) sous la forme d'un tube pour former un chevauchement des deux bordures du matériau d'emballage (1),
sceller longitudinalement dans la direction longitudinale au niveau du chevauchement pour former une zone de scellement longitudinale,
remplir un contenu dans le matériau d'emballage en forme de tube (1),
presser le matériau d'emballage (1) dans la direction transversale à chaque intervalle prédéterminé,
sceller avec un scellement transversal pour former une zone de scellement transversale,
couper le matériau d'emballage (1) au niveau de la zone de scellement transversale pour obtenir un corps préformé en forme de coussin,
plier le long des lignes de pliage pour obtenir le conteneur d'emballage (14), et agencer et sceller un capuchon (11) pour couvrir le bec verseur (10),
la fermeture de bec comprenant le bec verseur (10) ayant le tube-bec (5) prévu dans le trou de versement du conteneur d'emballage (14) et une base (6) intégrée avec le tube-bec (5) et jointe au panneau du conteneur en bordure du trou de versement,
**caractérisé en ce que**
la fermeture de bec comprend une cloison scellée susceptible d'être rompue (9) dotée du fond du tube-bec (5) pour sceller le bec verseur (10),
le capuchon (11) qui couvre le bec verseur (10) est inséré de façon détachable dans le tube-bec (5), et le capuchon (11) a une cloison de fond (25) qui adhère et qui est scellée avec la face supérieure de la cloison scellée (9) sur la surface au-dessous du capuchon (11) afin de rompre la cloison scellée (9), et une bague de traction (27) pour tirer le capuchon inséré.

2. Procédé de fabrication d'un conteneur d'emballage (14) selon la revendication 1, dans lequel la cloison de fond (25) du capuchon (11) comprend un trou à air (26) qui pénètre à travers le dessus et le dessous de la cloison, dans l'étape de scellement du capuchon (11), après avoir inséré le capuchon (11) dans le tube-bec (5), un espace entre la cloison de fond (25) et la cloison scellée (9) est évacué via le trou à air (26), et la cloison de fond (25) est thermoscellée sur la cloison scellée (9).

3. Procédé de fabrication d'un conteneur d'emballage (14) selon la revendication 1, dans lequel une couche conductrice (13) est prévue dans une surface de scellement de la cloison de fond (25) et/ou de la cloison scellée (9) et, dans l'étape de scellement du capuchon (11), après avoir inséré le capuchon (11) dans le tube-bec (5), la cloison de fond (25) adhère à la cloison scellée (9) et est thermoscellée sur la cloison scellée (9) avec un chauffage par induction.

4. Procédé de fabrication d'un conteneur d'emballage selon la revendication 3, dans lequel la couche conductrice (13) est formée par un moulage à deux étapes en utilisant une résine thermoplastique contenant une substance magnétique.

5. Procédé de fabrication d'un conteneur d'emballage selon la revendication 3, dans lequel la couche conductrice (13) est un film conducteur en forme d'anneau constitué de polyéthylène/couche d'aluminium/polyéthylène.

6. Procédé de fabrication d'un conteneur d'emballage (14) selon la revendication 1, dans lequel un film de barrière est agencé sur une paroi intérieure de la cavité du premier moule (15), et une couche de barrière est formée au moins dans la surface intérieure de la cloison scellée (9).

7. Fermeture de bec comprenant un bec de versement (10) ayant un tube-bec (5) prévu dans un trou de versement d'un conteneur d'emballage (14) obtenu en formant un matériau d'emballage laminé semblable à une nappe (1) sous une forme tubulaire et en scellant le matériau d'emballage (1), et une base (6) intégrée avec le tube-bec (5) et jointe à un panneau de conteneur bordant le trou de versement, une cloison scellée (9) susceptible d'être rompue et dotée du fond du tube-bec (5) pour sceller le bec verseur (10), et un capuchon (11) couvrant le bec verseur (10), **caractérisée en ce que**
le capuchon (11) est inséré de façon détachable dans le tube-bec (5),
le capuchon (11) a une cloison de fond (25) qui adhère à la face supérieure de la cloison scellée (9) et qui est scellée avec la face supérieure de la cloison scellée (9) sur la surface inférieure du capuchon (11) afin de rompre la cloison scellée (9), et une bague de traction (27) qui tire le capuchon inséré (11), et
dans laquelle le tube-bec (5) et le bec verseur (10) de la fermeture de bec, et la cloison scellée (9) sont formés en injectant une résine en fusion sur le matériau d'emballage formant le conteneur d'emballage (14) en agençant un premier moule (15) ayant une cavité prédéterminée pour couvrir le côté intérieur du conteneur, et en agençant un second moule ayant une cavité prédéterminée pour couvrir l'extérieur du trou de versement correspondant à l'extérieur du conteneur (14).

8. Fermeture de bec selon la revendication 7, dans laquelle le capuchon (11) est constitué de la cloison de fond (25), d'une paroi latérale qui s'engage dans une surface intérieure du tube-bec (5), d'un panneau supérieur (29) qui couvre une extrémité supérieure du tube-bec (5), et d'une paroi extérieure (30) qui couvre une surface extérieure du tube-bec (5), la paroi extérieure (30) étant prévue au moins sur le côté et sur l'autre côté où la bague de traction (27) tire le capuchon (11).

9. Fermeture de bec selon la revendication 1, dans laquelle la paroi extérieure (30) couvre la totalité de la circonférence de la surface extérieure du tube-bec (5) et, sur le côté où la bague de traction (27) tire le capuchon (11), elle est réalisée de manière à être rompue lors de l'ouverture due à la traction.

10. Fermeture de bec selon la revendication 7, dans laquelle une couche conductrice (13) est prévue dans une surface de scellement de la cloison de fond (25) et/ou de la cloison scellée (9), et dans laquelle la cloison de fond (25) adhère et est thermoscellée à la cloison scellée (9).

11. Tube-bec selon la revendication 10, dans lequel la couche conductrice (13) est formée d'une résine thermoplastique contenant une substance magnétique, ou dans lequel la couche conductrice (13) est un film conducteur en forme d'anneau constitué de polyéthylène/couche d'aluminium/polyéthylène.

12. Conteneur d'emballage (14), obtenu
en formant le matériau d'emballage laminé semblable à une nappe (1) ayant des lignes de pliage pour lui donner une forme en tube,
en formant un chevauchement des deux bordures du matériau d'emballage (1), en réalisant un scellement longitudinal dans la direction longitudinale au niveau du chevauchement pour former une zone de scellement longitudinale,
en remplissant un contenu dans le matériau d'emballage en forme de tube (1),
en pressant le matériau d'emballage (1) dans la direction transversale à chaque intervalle prédéterminé,
en scellant avec le scellement transversal pour former une zone de scellement transversale,
en coupant le matériau d'emballage (1) au niveau de la zone de scellement transversale pour obtenir un corps préformé en forme de coussin,
et en pliant le long des lignes de pliage pour obtenir le conteneur d'emballage (14), le conteneur d'emballage (14) comprenant une fermeture de bec comprenant un bec verseur (10) ayant un tube-bec (5) prévu dans un trou de versement du conteneur d'emballage (14) et une base (6) intégrée avec le tube-bec (5) et jointe au panneau du conteneur bordant le trou de versement,
**caractérisé en ce que**
la fermeture de bec comprend une cloison scellée (9) susceptible d'être rompue et pourvue du fond du tube-bec (5) pour sceller le bec verseur (10), et un capuchon (11) qui couvre le bec verseur (10),
le capuchon (11) est inséré de façon détachable dans le tube-bec (5), et le capuchon (11) a une cloison de fond (25) qui adhère et qui est scellée avec la face supérieure de la cloison scellée (9) sur la surface inférieure du capuchon (11) afin de rompre la cloison scellée (9), et une bague de traction (27) qui tire le capuchon inséré, et
dans lequel le tube-bec (5) et le bec verseur (10) de la fermeture de bec et la cloison scellée (9) sont formés en injectant une résine en fusion sur ledit matériau d'emballage (1) en agençant un premier moule (15) ayant la cavité prédéterminée pour couvrir le côté intérieur du trou de versement correspondant au côté intérieur du conteneur (14), et en agençant un second moule (26) ayant une cavité prédéterminée pour couvrir l'extérieur du trou de versement correspondant à l'extérieur du conteneur.

13. Conteneur d'emballage selon la revendication 12, dans lequel une couche conductrice (13) est prévue dans une surface de scellement de la cloison de fond (25) et/ou de la cloison scellée (9), et dans lequel la cloison de fond (25) adhère sur la cloison scellée (9) et est thermoscellée sur la cloison scellée (9).

14. Conteneur d'emballage selon la revendication 13, dans lequel la couche conductrice (13) est formée d'une résine thermoplastique contenant une substance magnétique, ou dans lequel la couche conductrice (13) est un film conducteur en forme d'anneau constitué de polyéthylène/couche d'aluminium/polyéthylène.
